(19) Europäisches Patentamt
European Patent Office
Office européen des brevets

(11) EP 4 738 651 A1

(12) EUROPEAN PATENT APPLICATION

(43) Date of publication:
06.05.2026 Bulletin 2026/19

(21) Application number: 24209559.4

(22) Date of filing: 29.10.2024

(51) International Patent Classification (IPC):
H02J 50/90 (2016.01)

(52) Cooperative Patent Classification (CPC):
H02J 50/90

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Delta Electronics (Thailand) Public
Co., Ltd.
Samutprakarn 10280 (TH)

(72) Inventors:
• LOESER, Leon Andrea
79111 Freiburg (DE)
• ENDERLIN, Jonas
79331 Teningen (DE)

(74) Representative: Hoefer & Partner Patentanwälte
mbB
Pilgersheimer Straße 20
81543 München (DE)

(54) **ALIGNMENT CONTROL FOR WIRELESS POWER SYSTEM AND POWER TRANSMISSION SYSTEM**

(57) The invention concerns a wireless power system (1), comprising a first unit (10, 20) including a pad (11, 21) configured to wirelessly transmit or receive power and a wireless communication unit (12, 22); and a control unit (2), wherein the pad (11, 21) is configured to wirelessly transmit or receive power to or from a second unit (10, 20), and the wireless communication unit (12, 22) is configured to receive a communication signal (32) from the second unit (10, 20), and wherein the control unit (2) is configured detect at least one phase value of the communication signal (32) and to determine, based on the detected phase value, a relative position of the wireless communication unit (12, 22) and the second unit (10, 20). Furthermore, the invention concerns a power transmission system (100) comprising the wireless power system (1) and the second unit (10, 20).

## Fig. 1

EP 4 738 651 A1

**Description**

**Field of the Invention**

The invention concerns a wireless power system and a power transmission system.

**Background of the Invention**

Generally, wireless power systems for wirelessly transferring power between a transmission unit and a reception unit (commonly also referred to as "primary unit" and "secondary unit" or "TX/RX") are known. Therein, it is commonly a challenge to position these with respect to one another for efficient power transmission, commonly referred to as "alignment".

Attempts to overcome this challenge are known from for example US2013/0033224 A1, US10,072,947, US2020/0290467 A1, and US2017/0111088 A1.

However, these known systems have multiple drawbacks.

For one, as described in for example US2013/0033224 A1 or US2020/0290467 A1, common solutions include multiple additional coils which also receive power on the reception side, wherein electrical values such as voltages induced in these or resonant frequencies are compared for determining alignment. This, however, has the drawback in that the additional coils are expensive and reduce efficiency both with respect to heat and electrical usage of transmitted power. Furthermore, their accuracy is relatively low.

The conventionally known alignment methods are generally either based on additional sensors or beacons, which are costly, bulky, and inefficient, or are based on the received power from the wireless transmission, which is however inaccurate in providing two- or three-dimensional alignment between the primary pad and the secondary pad and reduces transmission efficiency.

**Summary**

It is an object of the present invention to overcome these deficiencies. In particular, it is an object of the present invention to provide a wireless power system which can accurately and efficiently determine a relative position of its first unit relative to a second unit. It is further an object of the present invention to provide a power transmission system with a first unit and a second unit which can accurately and efficiently determine a relative position between the first unit and the second unit.

The solution of this object is achieved by the features of the independent claim. The dependent claims contain advantageous embodiments of the present invention.

In particular, the solution of these objects is achieved by the wireless power system according to claim 1. The wireless power system comprises a first unit including a pad configured to wirelessly transmit or receive power and a wireless communication unit. The first unit further includes a control unit. Therein, the pad is configured to wirelessly transmit or receive power to or from a second unit, and the wireless communication unit is configured to receive a communication signal from the second unit. The control unit is configured detect a phase value of the communication signal and is configured to determine, based on the detected phase value, a relative position of the wireless communication unit to the second unit.

In other words, the control unit is configured to determine the relative position or distance of the wireless communication unit, which is included in the first unit of the wireless power system, to an external second unit. For example, the first unit may be a reception unit (secondary side unit), and the control unit is configured to determine its alignment with a transmission unit (primary side unit). In some examples, the first unit is comprised by a vehicle, whereas the second unit is comprised by an external ground unit or by an external wall unit. Of course, the same holds true for examples in which the first unit is a ground unit or a wall unit and the second unit is an external vehicle-mounted unit.

In particular, it is an advantage of the present invention that the wireless power system especially comprises only the first unit. Thereby, the alignment can be carried out by the control unit largely independent from configurations of the second unit. Preferably, the second unit is configured to at least transmit, especially also receive, the communication signal.

In the sense herein, the term "relative position" refers to an at least one-dimensional, preferably two-dimensional, more preferably three-dimensional, distance from the first unit to the second unit. Preferably, the absolute position of one of the first unit and second unit is known. For example, one of the units is disposed in a predetermined location, for example in a parking lot or at a charging station. Thereby, an absolute position of the units can thereby be determined via the detected relative position and the known predetermined location. Furthermore, the term "relative position", in some preferable embodiments, also refers to an alignment angle (or spatial angle) between the first unit and the second unit.

In the sense herein, power transmission and/or reception will in some instances be abbreviated to "power transfer".

Herein, the wireless power system uses the phase value of the communication signal to determine the relative position and control an alignment to the second unit. Thereby, no further power reception or transmission coils or magnetic materials apart from those used in the pad are necessary in the wireless power system, especially the first unit, in order to carry out alignment. Furthermore, the control unit is configured to determine the relative position by analyzing only the phase value of the communication signal. In other words, for example, the communication signal itself does not carry the information used by the control unit to determine the relative position, i.e. this information is not encoded into the signal. Instead, the control unit determines the relative position based preferably solely on the physical characteristics of the communication signal, not the encoded information therein. In some embodiments, such encoded information may be used additionally to the phase value based position detection of the present invention.

Preferably, the control unit is configured to receive the communication signal via the wireless communication unit and additionally or simultaneously use the communication signal for detecting the relative position. Thereby, preferably, no additional sensor for detecting received power by the magnetic field of the power transmission by the pad is necessary for detecting the relative position, since position detection can be based solely on the communication signal.

In one advantageous embodiment, the wireless communication unit is configured to receive, especially also provide, a near-field communication link as the communication signal. Further preferably, the communication signal is a pad-to-pad link (commonly also referred to as "PPL"). Therein, preferably, the communication signal communicates for example identification of the first unit and the second unit, power transmission requirements for controlling power transmission via the pad, or the like.

Preferably, in the near-field communication link, a 10 MHz to 15 MHz signal, preferably a 13.56 MHz signal, for example, is used as a carrier for the transmission of data.

Preferably, the pad for wireless power transfer and the wireless communication unit are contained in a common housing of the first unit. Thereby, preferably, a relative position of the wireless communication unit to the second unit essentially corresponds to a relative position of the pad, especially the wireless power system, to the second unit.

In general, a phase of the wireless communication signal can depend on the distance between the wireless communication unit, i.e. the first unit, and the second unit. Therefore, preferably in some embodiments, by determining the phase of the received wireless communication signal as the phase-value, the distance can thus be determined. In particular, in some embodiments, an absolute phase of the transmitted (for example by the second unit) communication signal is predetermined and known to the control unit. By comparing the received phase with the transmitted phase, the control unit can in some examples determine the distance between the first unit and the second unit. For instance, the phase of the wireless communication signal and the distance are in a predetermined relationship, especially related to a refractive index of the medium (i.e. air and/or parts of the wireless power system, especially the pad). This predetermined relationship can be preferably measured and stored in the control unit, for instance as a look-up table comparing phases, especially phase-differences and/or phase-changes in time and/or space, and corresponding distances. The control unit thus preferably refers to the lookup-table to determine, based on the measured phase-value, the distance based on the predetermined relationship.

In particular, the phase of the wireless communication signal can depend on the distance also due to different propagation paths through materials of the wireless power system and/or the second unit as well as the medium (predominantly air) separating the two (also referred to as "phase constant", i.e. the imaginary part of the propagation constant). As aforementioned, this relationship can be predetermined and stored, for example as a look-up table in the control unit.

Preferably, in some embodiments, the phase value is used to determine a time of flight (TOF) of the communication signal. This is preferably achieved directly via the phase value, or indirectly using the aforementioned distance relationship and the speed of light.

In some embodiments, the control unit is configured to calculate a phase-relation, as the phase-value, between multiple receptions of the communication signal and to determine said relative position based on the calculated phase-relation. In some examples, the phase-relation is a comparison of phase-values between the multiple receptions. This has the advantage that an absolute phase of the communication signal does not necessarily need be known, although this information can preferably be combined.

In some examples, the phase-relation is especially a phase-difference between multiple receptions of the communication signal. In other words, the control unit is preferably configured to calculate the phase-difference between multiple receptions of the communication signal by the wireless communication unit. Thus, phases of the communication signal at and between multiple receptions can be compared, which provides an efficient means for alignment detection.

Preferably, the phase-relation, especially the phase-difference, can be determined between multiple receptions in time and/or in space. In general, if the first unit is moving, multiple receptions in time will also be multiple receptions in space. Furthermore, if the first unit as will be detailed below includes multiple reception antennas, the multiple receptions in space can also be simultaneous, and can additionally also be at different times.

In some embodiments, the control unit is configured to calculate a time-phase-relation, as said phase-relation.

Therein, the time-phase-relation is calculated between multiple receptions (i.e. multiple samples) at respectively different times, especially during relative movement between the wireless communication unit and the second unit. Preferably, a time-stamp of the respective multiple receptions is recorded for each of the multiple receptions. Preferably therein, the multiple transmissions of the communication signal (corresponding to the multiple receptions) have a common phase propagation and reference, as the sent signal preferably has a continuous phase.

Preferably, the control unit is configured to calculate said time-phase-relation twice, respectively between two receptions at different times (i.e. for example at least three receptions, between first and second and between second and third receptions), and to calculate a time-dependent change between the time-phase-relations. By calculating the time-dependent change between the time-phase-relations, the control unit can determine whether (or not) and in which direction the distance between the units is changing, for example whether the first unit is coming closer to the second unit or vice versa. Thereby, alignment can be based thereon.

In some embodiments, the control unit is further configured to compare said time-dependent change with input and/or predetermined movement information, especially comprising amount (distance) and/or direction, of the wireless communication unit. In other words, the time-dependent change can be used by the control unit as feedback with respect to input and/or predetermined movement information, and alignment can thus be carried out with higher accuracy. For instance, the control unit is further configured to receive information or a signal based on the relative movement between the wireless communication unit and the second unit during a time frame between said multiple receptions. With this further information, the time-dependent change between time-phase-relations is correlated with the relative movement, such that distance and/or direction for optimal alignment are determinable by the control unit.

Illustratively, if traveled distance between the multiple receptions in time is known, this can be understood as being essentially similar to known locations of multiple antennas respectively at different locations simultaneously receiving the wireless communication signal (time and movement equal to distance).

Preferably, when calculating time-phase-relations, a time difference (difference in time stamps) of multiple receptions is below a predetermined threshold, especially so as to prevent symmetry properties of the time-phase-relation, particularly time-phase-difference, to cause an erroneous result. For example, a time difference corresponds preferably to at most $2\pi$, preferably at most $1\pi$, of the wireless communication signal.

Preferably, the wireless communication unit comprises at least one main communication antenna for transmitting and receiving the communication signal. Furthermore, the wireless communication preferably comprises at least one, especially two to four, auxiliary sensing antennas for detecting the relative position. Thereby, the communication signal can be advantageously received at different places/spaces simultaneously.

For instance, in preferable combination with the predetermined absolute phase, and using predetermined information on the relative locations of the auxiliary sensing antennas with respect to each other and/or the main communication antenna, the relative position can be determined with high accuracy. Furthermore, in addition to the relative position in spatial coordinates, i.e. a distance, the relative position in terms of alignment angle (or spatial angle) can also be detected.

Preferably, the auxiliary sensing antennas are configured to receive the communication signal from the second unit. Preferably therein, the auxiliary sensing antennas are configured to receive the communication signal only for detecting the relative position, not however, for transfer of information. Preferably therein, the control unit is configured to decode the communication signal only from the main communication antenna. Preferably, the control unit is not configured to decode, i.e. is configured not to decode, the communication signal received by the auxiliary sensing antennas. Preferably, the communication signal received by the main communication antenna can also be used for determining the relative position, or can be used only for decoding.

In some embodiments, the control unit is configured to calculate a space-phase-relation, as the phase value, between multiple receptions of the communication signal at respectively different antennas, of the at least one main communication antenna and the at least one auxiliary sensing antenna. Furthermore, the control unit therein is configured to determine said relative position based on the calculated space-phase-relation. Preferably, the control unit is configured to determine the space-phase-relation for multiple receptions of the communication signal that are received (within technical bounds) simultaneously. In other embodiments, the multiple receptions for determination are at different locations (antennas) and at different times, for example when the first unit and the second unit are moving relative to one another.

Preferably, the control unit is configured to calculate a difference between phases of the multiple receptions, as the space-phase-relation, and to determine a distance between the respectively different antennas to the second unit.

For example, the control unit calculates phase differences between phases of the communication signal received by each of the auxiliary sensing antennas. Since the phase difference can depend on the distance between the first unit and the second unit, the control unit can determine preferably which auxiliary sensing antenna (or main communication antenna) is closer to the second unit. If the phase difference is substantially equal between all antennas, the control unit can determine that alignment is completed.

In some embodiments, a plurality of auxiliary sensing antennas are arranged surrounding, especially symmetrically surrounding, the main communication antenna. Thereby, the wireless communication unit can be manufactured cost-effectively. Furthermore, this allows the wireless power system to be easily implementable as a transmission (ground) or a reception (vehicle) side.

In some examples, the control unit is further configured to detect a signal strength, especially a maximum amplitude and/or a maximum peak-to-peak value, of the communication signal and to determine, based on the detected signal strength and on the detected phase, the relative position of the wireless communication unit and the second unit. Thereby, the accuracy of alignment is further increased. Furthermore, this has the advantage in that in certain distance ranges, phase-based position determination or amplitude-based position determination will be more accurate than the other, and can thus be relied on for different ranges. Furthermore, the control unit is preferably configured to verify the determined distance calculated via the phase-value using the aforementioned signal strength detection, and vice versa. Such a redundancy further increases accuracy.

In some embodiments, the wireless communication unit is separated by a distance to the second unit. Therein, the control unit is configured to:

- At or below a first predetermined distance value, detect the relative position using the communication signal; and/or
- At or below a second predetermined distance value, transfer data using the communication signal.

Preferably, the first predetermined distance value is larger than the second predetermined distance value. Therein, the control unit is configured to transfer data using the communication signal only below the second predetermined distance value.

Preferably, at or below the second predetermined distance, the control unit is configured to decode the communication signal and thereby transfer data, especially via the near-field communication link and/or pad-to-pad link.

Preferably, above the second predetermined distance, the control unit receives the communication signal via the wireless communication unit, preferably without the transfer of data.

For example, at or below the second predetermined distance, a handshake can be carried out between the units so as to establish data transfer. Such a handshake is, for example, achieved via polling of the communication signal between the units. However, such polling does not transfer data.

Above the second predetermined distance, the communication signal is preferably only used for determining relative position. Additionally, above the second predetermined distance, the communication signal may also be used for polling (i.e. only used for determined relative position and polling), without the transfer of data. For example, the communication signal may thereby be used for determining relative position at distances at which its signal strength is not adequate for data transfer, wherein however its phase value may nonetheless be detected, for example via the polling.

Preferably, the control unit is configured to detect the relative position using the communication signal also at or below the second predetermined distance. In other words, at or below the second predetermined distance, the communication signal is used for data transfer as well as for determining of relative position.

For instance, at high distance ranges, the communication signal may be attenuated such that reliable data transfer is not possible or is prone to error. At such distances (first predetermined distance value), for example, the control unit is configured to detect the relative position using the communication signal, and at suitably lower distances (at or below the second predetermined distance value), the control unit is configured to transfer data. At or higher than the first predetermined distance value, the control unit is preferably configured to detect, especially by comparing the relative phases between the antennas, the direction in which the second unit is located relative to the first unit. The control unit is preferably also configured to further carry out relative position detection at or below the second predetermined distance value, in addition to data transfer.

Further advantageously, the control unit is configured to control the pad to wirelessly transfer and/or receive power at or below a third predetermined distance value, wherein the third predetermined distance value is smaller than the second predetermined distance value. In particular, the third predetermined distance value is a distance value, within which the control unit determines that alignment has been achieved.

Preferably, the pad comprises one or more coils for power transmission and/or reception. In particular, these coils are separate from the antennas of the wireless communication unit.

Advantageously, the control unit is configured to modulate the communication signal using on-off shift keying modulation, especially for transferring data, i.e. for encoding the communication signal. Preferably, other types of modulation are also possible, such as for example frequency modulation.

Preferably, if the communication signal, especially for said handshake, is known beforehand, a large gain is preferably achieved by using correlation in signal processing, reducing a reliance on low-noise measurements (also referred to as "correlation amplification").

In some embodiments, the control unit comprises a multiplexer, an anti-aliasing filter, and an analog-to-digital converter. Thereby, a control unit with relatively low-cost components is achieved that can provide accurate alignment determination.

Further preferably, the control unit comprises a microcontroller, a transceiver, and an antenna matching circuit connected to the respective main communication antenna for transferring the communication signal between the units, especially via the communication link, i.e. the pad-to-pad link.

Preferably, the main and/or auxiliary antenna(s) is/are (a) flat printed circuit board antenna(s).

Preferably, the control unit is a processor. For example, the control unit comprises a microcontroller ("MCU"), a CPU, a GPU, a SoC, an ASIC, an FPGA, or the like. Preferably, the control unit further comprises a storage medium.

The present invention also concerns a power transmission system comprising the wireless power system according to any one of the foregoing described examples. Furthermore, the power transmission system comprises the second unit. In other words, the power transmission system comprises the wireless power system with the first unit and the control unit and additionally comprises the second unit. Therein, for example, the first unit of the wireless power system is a secondary unit (reception side), and the pad of the first unit is a secondary pad configured to wirelessly receive power. The wireless communication unit therein is a secondary wireless communication unit. The second unit is a primary unit including a primary pad for wireless power transmission and a primary wireless communication unit (transmission side). In this regard, although exemplary described herein, it is to be understood that the first unit may also be on a primary side, and the second unit may thus be on a secondary side, with respect at least to power transfer, preferably also with respect to transmission (primary side) and reception (secondary side) of the communication signal, and vice versa.

In preferable embodiments, the secondary unit, i.e. the first unit of the wireless power system, comprises the control unit. This is especially preferable when the secondary unit is non-stationary, and is for example mounted in a vehicle.

Preferably, the primary wireless communication unit, i.e. the wireless communication unit of the second unit, comprises at least one primary main communication antenna for transmitting and receiving the communication signal. Preferably, the configuration of the primary main communication antenna is the same as of the main communication antenna of the first unit. Therein, the primary wireless communication unit comprises at least one, especially two to four, primary auxiliary sensing antennas for detecting the relative position. The primary auxiliary sensing antennas preferably have the same configuration as those of the first unit, i.e. the aforementioned auxiliary sensing antennas. This has the advantage in that both the primary and secondary side can be configured substantially equally, which is advantageous in terms of signal and power transfer as well as ease of manufacturing. Furthermore, in the preferable case that both the first unit and the second unit (i.e. primary and secondary side units) are configured for detecting the relative position, the units can provide a more accurate detection and/or can verify the detected relative position of the respective other unit.

In some preferable examples, the secondary unit is comprised by an electric vehicle, especially an industrial electric vehicle. The primary unit is especially wall-mounted or floor-mounted.

The present invention also concerns a vehicle, especially an electric vehicle, comprising the wireless power system according to any one of the foregoing described examples or comprised by the power transmission system according to any one of the foregoing described examples.

Preferably, the electric vehicle is an automated guided vehicle (commonly abbreviated as "AGV") comprising the wireless power system according to any one of the foregoing described examples. Therein, the AGV preferably comprises a control unit configured to automatically (i.e. at least largely without user input) guide the AGV to align the primary unit and the secondary unit so as to improve charging efficiency. Preferably, the AGV comprises the secondary unit, i.e. is configured primarily for power reception.

Preferably, the control unit of the AGV is the control unit of the wireless power system. Therein, the control unit of the AGV is configured to receive, via the wireless communication unit, the communication signal and detect the at least one phase value of the communication signal transmitted by the primary unit, and to determine the relative position of the AGV and the primary unit (i.e. the second unit).

Advantageously, the control unit of the AGV is further configured to control the AGV, especially a drive unit of the AGV (i.e. motor, wheels etc.), to move the AGV according to the determined relative position so as to reduce, especially minimize, the distance to the second unit.

Further preferably, the control unit of the AGV is configured to enable wireless power transfer, especially wireless charging of batteries of the AGV, once the vehicle is deemed to be aligned with the second unit, especially once the distance based on relative position is smaller than a predetermined threshold (for example, smaller than the aforementioned third predetermined distance).

In particular, the control unit of the AGV is configured to determine the relative position of the AGV once, and move the AGV according to the above. This has the advantage of lower compute power being necessary for the control unit of the AGV. In an alternative embodiment, the control unit of the AGV is configured to continuously, for example every few, i.e. 2 or 5 or 10 seconds, detect the relative position and move the AGV accordingly. This increases the accuracy of alignment, and especially provides redundant measurements which can be used to verify the determination.

The foregoing described explanations of the AGV are combinable with the foregoing described explanations of the wireless power system.

Thereby, the present invention achieves an electric vehicle, in particular an AGV, which can be advantageously guided or advantageously guide itself to a primary unit with high accuracy and in an efficient manner, thereby achieving more efficient charging, faster charge speeds, and higher comfort for the passenger.

Preferably, the power transmission system according to some embodiments comprises the wireless power system as well as the foregoing described AGV. Therein, preferably, the control unit of the wireless power system is comprised by the AGV. In addition or alternatively thereto, the control unit of the wireless power system in the power transmission system is external to the AGV and communicates with the AGV's control unit, preferably via the communication signal, such that the AGV's control unit can suitably guide the AGV to the secondary unit.

The present invention also concerns a method for alignment of an AGV with a primary unit (second unit) according to the foregoing explained method of the AGV's control unit.

With the foregoing embodiments, the present invention provides a wireless power system capable of accurately detecting its position relative to a second unit. The present invention also provides a power transmission system in which the first unit can accurately detect its position relative to the second unit of the power transmission system.

The foregoing described preferable embodiments and configurations may be combined. Explanations with respect to primary side and/or secondary side are to be understood as principally interchangeable. Furthermore, the terms "primary side" and "secondary side" are to be understood as interchangeable with "power transmission side" and "power reception side", respectively.

Further details, advantages, and features of the preferred embodiments of the present invention are described in detail with reference to the figures. Therein:

**Brief Description of the Drawings**

Fig. 1 shows a top view of a power transmission system according to a first embodiment of the present invention in a vertical mounting orientation;

Fig. 2 shows a side view of a wireless power system of the power transmission system according to the first embodiment of the present invention;

Fig. 3 shows a schematic overlap view of the power transmission system with a phase graph for explaining the first embodiment of the present invention;

Fig. 4 shows a further schematic overlap view of the power transmission system with the phase graph for explaining the first embodiment of the present invention;

Fig. 5 shows a block diagram for explaining detail configurations of the power transmission system according to the first embodiment of the present invention;

Fig. 6 shows a block diagram for explaining detail configurations of a power transmission system according to a second embodiment of the present invention;

Fig. 7 shows a block diagram for explaining detail configurations of a power transmission system according to a third embodiment of the present invention; and

Fig. 8 shows a schematic drawing of an electric vehicle according to the present invention.

**Description of the Embodiments**

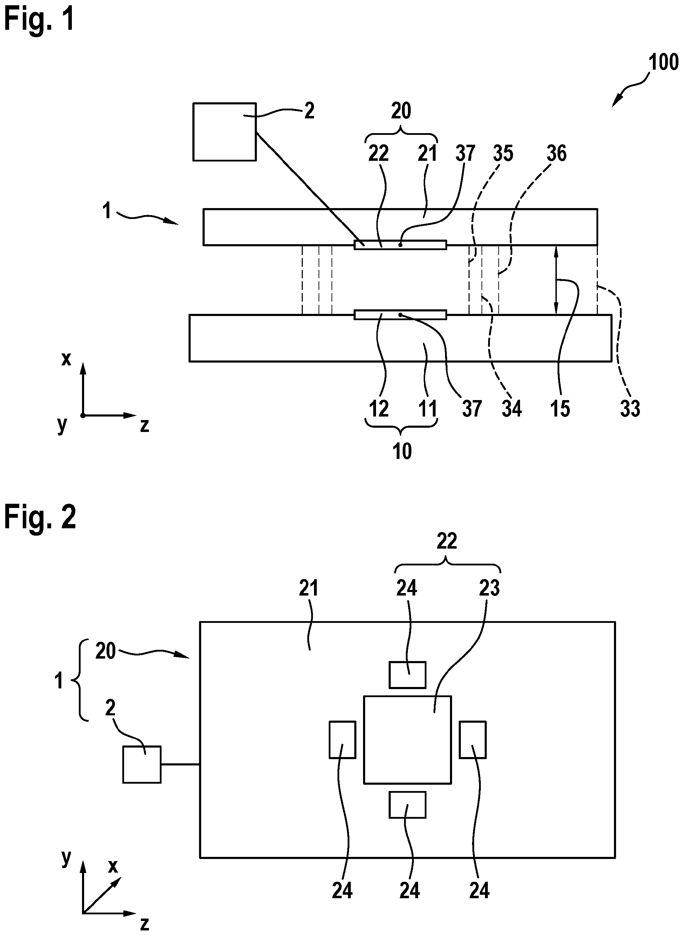

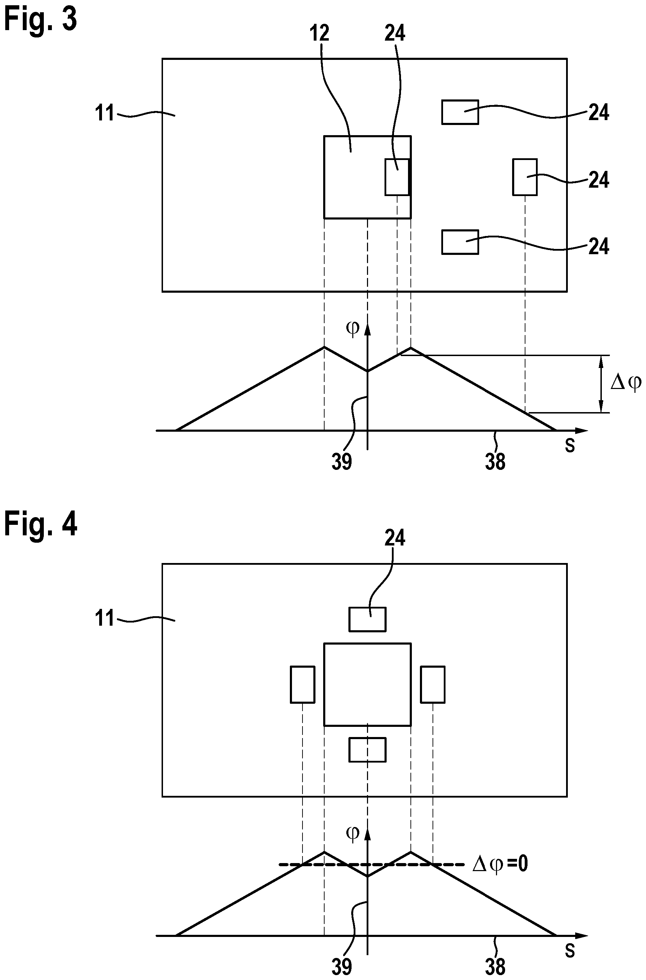

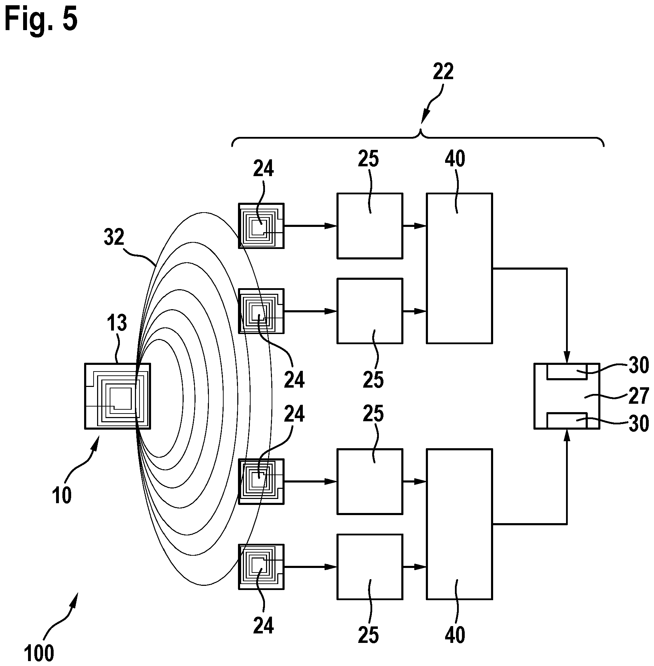

A first embodiment of the present invention will be described with reference to Figs. 1 to 5. Fig. 1 shows a top view of a power transmission system 100 according to a first embodiment of the present invention in a vertical mounting direction. Fig. 2 shows a detail side view of a wireless power system 1 of the power transmission system 100 according to the first embodiment of the present invention. Figs. 3 and 4 each show a schematic overlap view of the power transmission system 100 with a phase graph for explaining the first embodiment of the present invention. Fig. 5 shows a block diagram for explaining functions of the power transmission system 100 according to the first embodiment of the present invention.

As can be taken from Fig. 1, the power transmission system 100 of the present embodiment comprises a wireless power system 1 and a second unit 10 external to the wireless power system 1.

In particular, Fig. 1 shows the power transmission system 100 comprising the first unit 20 as a secondary side (reception side) and the second unit 10 as a primary side (transmission side) with respect to wireless power transfer (transmission & reception).

However, as shown in Fig. 2, the invention is not strictly limited thereto, and is understood as being implementable as a wireless power system 1 comprising preferably only one of the sides, i.e. primary or secondary. In the power transmission system 100 of Fig. 1, the wireless power system 1 is implemented as a secondary side (reception side) and the first unit 20 thereof will be denoted in the following as a "secondary unit 20", and the second unit 10 of the power transmission system 100 is implemented as a primary side (transmission side), and will be denoted in the following as "primary unit 10", as an example.

With regard to the power transmission system 100 of Fig. 1, the wireless power system 1 thereof comprises the secondary unit 20, which includes a pad 21 (henceforth "secondary pad 21") configured to wirelessly transfer power. The primary unit 10 also comprises a pad 11 (henceforth "primary pad 11"), configured to wirelessly transfer power to/from the secondary pad 21. Each of the primary pad 11 and the secondary pad 21 comprises coils (not shown), which inductively and/or capacitively couple with one another to wirelessly transfer electromagnetic energy.

Herein, for example, the wireless power transmission system 1 is configured to perform high-powered wireless charging in a range of 50 kHz to 80 kHz with a wattage of 1 kW to 75 kW.

As can be taken from the top view of Fig. 1, the primary unit 10 is preferably wall mounted. In an alternative embodiment, the primary unit 10 may be floor mounted.

The primary unit 10 further comprises a primary wireless communication unit 12. The secondary unit 20 further comprises a secondary wireless communication unit 22. The primary and secondary wireless communication units 12, 22 are shown schematically in Fig. 1. The secondary wireless communication unit 22 will be explained in more detail below with reference to Fig. 2.

Herein, the primary and secondary wireless communication units 12, 22 are configured to exchange information via near-field communication. In other words, the primary and secondary wireless communication units 12, 22 are configured to provide a near-field communication link as a communication signal. This is especially referred to as a "pad-to-pad link" (also known as "PPL"). In the present embodiment, the communication signal is encoded via on-off-shift keying modulation. However, the invention is not limited to such modulation, and alternative known modulation types may be implemented herein.

In the present embodiment, the communication signal includes (i.e. is encoded with) information regarding, for example, device identification, power transfer requirements for controlling power transmission via the pads, or the like. For example, a high number of wireless power systems 1 can be provided, for example in an industrial building, which are alternately supplied with power by the primary unit 10, and which therefore include identification information and/or respective power supply requirement information.

Furthermore, the wireless power system 1 comprises a control unit 2. In the present embodiment, the control unit 2 is connected to the secondary wireless communication unit 22. In addition, the control unit 2 is preferably connected to the primary wireless communication unit 12 and/or the primary pad 11 and/or the secondary pad 21. In particular, the control unit 2 is preferably connected wirelessly to any one or more of the foregoing described units.

Preferably, although not shown, the power transmission system 100 comprises a plurality of control units, wherein preferably each of the primary unit 10 and the secondary unit 20 comprises a (primary or secondary) control unit, which are respectively connected especially wirelessly to the control unit 2. In other words, the control unit 2 of the present embodiment is preferably a central control unit 2 for controlling the primary unit 10 and the secondary unit 20. Preferably, the control unit 2 may be comprised by the primary unit 10 or the secondary unit 20 and may be connected especially wirelessly to other (primary or secondary or central) control unit(s).

The control unit 2 of the wireless power system 1 is configured to detect a relative position of the wireless power system 1 to the external primary unit 10. Thereby, the wireless power system 1 can be brought into close alignment with the primary unit 10 (i.e. the second unit 10).

Herein, the control unit 2 is configured to detect a distance, especially a three-dimensional distance, between the primary unit 10 and the secondary unit 20. This distance is then preferably further used to bring the primary unit 10 and the secondary unit 20 into optimal alignment for power transmission.

First, the general alignment from position detection will be explained, and the detection of the relative position will be explained later.

As can be taken from Fig. 1, multiple predetermined distances 33, 34, 35, 36 may be defined from center points 37 of the primary wireless communication unit 12 and the secondary wireless communication unit 22.

Therein, depending on the distance between the center points 37, the control unit 2 is configured to carry out different modes of operation:

At or below the first predetermined distance 33, the control unit 2 is configured to detect the relative position of the communication units 12, 22. Therein, the control unit 2 is especially configured to only detect the relative position, without transfer of data between the communication units 12, 22 via the communication signal.

At or below a second predetermined distance 34, the control unit 2 is configured to transfer data using the communication signal, especially via a handshake establishing the near-field communication link or pad-to-pad link between the communication units 12, 22. Above this second distance 34, the communication link may not be adequately stable for data transfer, such that it is preferably only used for determining relative position. In addition to being used for determining relative position, the communication signal may be used at least at or above the second distance 34 for polling between the primary unit 10 and the secondary unit 20, for example for establishing the handshake. In other words, above the second distance 34, the communication signal is preferably not used for data transfer, and is preferably only used for determining relative position and polling.

Further, at or below this second distance 34, the control unit 2 is further configured to use the communication signal for determining the relative position of the primary unit 10 and the secondary unit 20 in addition to data transfer.

At or below a third predetermined distance 35, which is below the second predetermined distance 34, the control unit 2 is configured to control the primary pad 11 and/or the secondary pad 12 for wirelessly transferring power, especially in coordination with the data transferred by the communication signal. Furthermore, in this region, the control unit 2 may further detect the relative position for further optimized positioning of the primary unit 10 and the secondary unit 20.

Further yet, at or below a fourth predetermined distance 36, the control unit 2 is configured to determine more accurately the relative position of the primary unit 10 and the secondary unit 20, as for example fine alignment. For instance, as will be detailed further below, at or below the first predetermined distance 33, the control unit 2 is configured to determine the distance based on an amplitude value of the communication signal for rough alignment. Further, at or below the fourth predetermined distance 36, the control unit 2 is configured to determine the distance based on a phase value of the communication signal for fine alignment.

Although Fig. 1 shows the predetermined distances 33 - 36 being along the z-axis for ease of understanding, these distances 33-36 are not necessarily limited thereto. Instead, these may be understood as three-dimensional distances (distance regions), or in case for example heights (i.e. y-direction in Fig. 1) of the primary unit 10 and the secondary unit 20 are fixed, may be understood as two-dimensional distances (distance regions), especially in a plane defined by x-, and z-axes. Of course, this teaching can be easily transferred to the possible case of the primary unit 10 being floor mounted.

The detection of the relative position will now be explained in further detail especially in view of Figs. 2 to 4. Fig. 2 shows in detail a configuration of the wireless power system 1 shown in Fig. 1, and Figs. 3 & 4 each show schematically an alignment of the wireless power system 1 with the primary unit 10 overlapped with a graph showing detection values of the control unit 2. However, the following explanations with respect thereto can additionally or alternatively apply to the primary unit 10 and vice versa.

As shown in Fig. 2, the secondary wireless communication unit 22 comprises a main communication antenna 23 and four auxiliary sensing antennas 24. Herein, the main communication antenna 23 of the secondary wireless communication unit 22 communicates with a main communication antenna (not shown in Fig. 2, see Figs. 5 to 7) 13 of the primary wireless communication unit 12, especially for data transfer. The control unit 2 is configured to decode the communication signal received by the main communication antenna 23 of the secondary unit 20. This data transfer is especially carried out at or below the aforementioned second predetermined distance 34.

Preferably, the main communication antenna 23 and the auxiliary sensing antennas 24 are flat printed circuit board antennas.

The main communication antenna 23 and the four auxiliary sensing antennas 24 of the secondary wireless communication unit 22 are configured to receive the communication signal sent by the main communication antenna 13 of the primary wireless communication unit 12.

The control unit 2 is configured to detect the relative position of the primary wireless communication unit 12 and the secondary wireless communication unit 22 using the communication signal received by the auxiliary sensing antennas 24 of the secondary wireless communication unit 22. In particular, the control unit 2 is preferably not configured to decode the communication signal received by the auxiliary sensing antennas 24. Instead, the control unit 2 uses the signal received by the auxiliary sensing antennas 24 only to detect the relative position.

This detection of the relative position is especially carried out at or below the aforementioned first predetermined distance 33.

Herein, the auxiliary sensing antennas 24 are arranged so as to symmetrically surround the main communication antenna 23 of the secondary wireless communication unit 22. The auxiliary sensing antennas 24 are not connected directly to the main communication antenna 23 (see also Figs. 5 to 7). It is, however, not generally necessary to arrange the auxiliary sensing antennas 24 symmetrically around the main communication antennas 23.

Each of the auxiliary sensing antennas 24 of the secondary unit 20 receives the communication signal from the main communication antenna 13 of the primary unit 10. Since the auxiliary sensing antennas 24 are provided at different positions, the propagation path length of the communication signal received by each of these will differ such that phase values thereof will differ.

In Figs. 3 & 4, an overlap between the primary pad 11 and the primary wireless communication unit 12 on the one side and the secondary wireless communication unit 22 with its auxiliary sensing antennas 24 is shown, the main communication antenna 22 of the secondary wireless communication unit 22 not being shown for ease of understanding. Furthermore, this view is overlapped with a graph depicting the detection value of the control unit 2. Fig. 3 shows a state in which final alignment is not (yet) achieved, whereas Fig. 4 shows the aligned state.

In the present embodiment, the control unit 2 is configured to detect a phase value of the communication signal as shown in Figs. 3 & 4. Therein, an abscissa 38 denotes time in seconds, and an ordinate 39 denotes the phase in degrees or radians.

The control unit 2 of the present embodiment is configured to detect a space-phase-relation as the phase value. The control unit 2 detects multiple receptions of the communication signal in space via each of the auxiliary sensing antennas 24 (shown via dotted lines) and compares their phases to determine a distance between the respectively different auxiliary sensing antennas 24 to the primary unit 10.

Every signal has a phase $\varphi_n$ (n = 1...4) with a phase-offset $\Delta\varphi$ shared between all receptions. Herein the phases $\varphi_n$ have the following functional dependencies:

$$\varphi_1 (x_p - x_s, y_p\text{-}y_s, z_p\text{-}z_s, \Delta\varphi);$$

$$\varphi_2 (x_p - x_s, y_p\text{-}y_s, z_p\text{-}z_s, \Delta\varphi);$$

$$\varphi_3 (x_p - x_s, y_p\text{-}y_s, z_p\text{-}z_s, \Delta\varphi);$$

and

$$\varphi_4 (x_p - x_s, y_p\text{-}y_s, z_p\text{-}z_s, \Delta\varphi)$$

Therein, x, y, and z refer to Cartesian space coordinates, whereas the subscripts "s" and "p" refer to the secondary unit 20 and the primary unit 10, respectively. For example, "$x_p$ - $x_s$" denotes the distance, in x-direction, between the primary unit and the secondary unit.

In a two-dimensional determination, by subtraction via the control unit 2, phase-distances proportional to the distance between primary unit 10 and the secondary unit 20 can be determined:

$$(x_p - x_s) \sim \varphi_{13} (x_p - x_s, y_p\text{-}y_s, z_p\text{-}z_s, \Delta\varphi) = \varphi_1 (\dots) - \varphi_3 (\dots);$$

and

$$(y_p\text{-}y_s) \sim \varphi_{24} (x_p - x_s, y_p\text{-}y_s, z_p\text{-}z_s, \Delta\varphi) = \varphi_4 (\dots) - \varphi_2 (\dots)$$

Therein, the shared offset of all phases cancels out, such that only the respective phase-shift $\Delta\varphi$ caused by different propagation paths of the communication signal to each of the auxiliary sensing antennas 24 remains.

As a comparison of Figs. 3 & 4 shows, the phase shift $\Delta\varphi$ between the multiple receptions is dependent on the respective relative distance to the primary unit 10, especially its main communication antenna 23. Therefore, by calculating the space-phase-relation, the control unit 2 can determine which auxiliary sensing antenna 24 is closer to the primary unit 10, and thereby determine its relative position thereto.

As shown in Fig. 4, when the phase shift $\Delta\varphi$ between the multiple receptions is zero, the control unit 2 deems the alignment as complete, since the calculated distance between each of the auxiliary sensing antennas 24 and the primary unit 10 is equal. It is to be understood that a threshold value may be employed in addition or alternatively to the phase shift between multiple receptions being zero for determining achieved alignment.

As can be understood from the foregoing, the control unit 2 is not limited to detecting said space-phase-relation. In other examples, it is possible to detect multiple receptions of the communication signal, especially via a single or multiple antennas 23, 24, at different points in time as a time-phase-relation, especially if the wireless power system 1 is moving relative to the primary unit 10. This example can preferably be carried out without auxiliary sensing antennas 24, using preferably only the main communication antenna 23 of the secondary unit 20.

For instance, the control unit 2 is configured to calculate a phase-difference between a first reception and a second reception of the communication signal, the second reception being at a later time than the first reception. This can be understood as being principally similar to the control unit 2 calculating a phase-difference between two simultaneous receptions, each of one auxiliary sensing antenna 24 separated in space as in the above space-phase-relation.

The control unit 2 then preferably calculates at least one further phase-difference, for instance between the second reception and a third reception, and is configured to compare the two calculated phase-differences as a time-

**EP 4 738 651 A1**

dependent change between the phase-differences. By comparing at least two such calculated phase-differences as the time-dependent change with predetermined or received information on relative movement, the control unit 2 is configured to determine a time-dependent distance between the wireless power system 1 and the primary unit 10. With this, the control unit 2 can determine whether the relative movement causes the relative distance to increase or decrease in time, and can thus instruct alignment. However, it is not principally necessary, but preferable, to calculi the time-dependent change. Alternatively or in addition thereto, using only a phase-difference in time (for instance between only two receptions), a mathematical sign (i.e. positive or negative) of the phase-difference can indicate whether the relative distance has increased or decreased in the time between the two receptions, and can therefore also be used for alignment.

Therefore, for alignment, the control unit 2 is configured to output a value indicating direction (x, y, z coordinates) and distance to the primary unit 10.

In a further example, the control unit 2 is additionally configured to detect a signal strength, especially a maximum amplitude and/or a maximum peak-to-peak value, of the communication signal and to determine, based on the detected signal strength and on the detected phase value, the relative position of the wireless power system 1 to the primary unit 10.

Therein, the auxiliary sensing antennas 24 receive amplitudes $A_1$, $A_2$, $A_3$ and $A_4$. The control unit 2 is configured to compare the amplitudes and to determine the relative position via trilateration, wherein:

$$A_1(x_P - x_S, y_P - y_S, z_P - z_S);$$

$$A_2(x_P - x_S, y_P - y_S, z_P - z_S);$$

$$A_3(x_P - x_S, y_P - y_S, z_P - z_S);$$

and

$$A_4(x_P - x_S, y_P - y_S, z_P - z_S)$$

Therein, x, y, and z refer to Cartesian space coordinates, whereas the subscripts "s" and "p" refer to the secondary unit 20 and the primary unit 10 as above, respectively. For example, "$x_p - x_s$" denotes the distance, in x-direction, between the primary unit 10 and the secondary unit 20.

Since the position of the primary unit 10 is preferably known or predetermined, especially when the primary unit 10 is wall mounted or floor mounted, commonly employed equations for trilateration can be solved using at least three of the measured amplitudes.

Furthermore, the control unit 2 may be preferably configured to calculate a cumulated value, especially a sum, of the detected amplitudes. Thereby, the control unit 2 is configured to detect a size of the air gap 15 between the primary unit 10 and the secondary unit 20 on the basis of said value or sum.

The detection based on the phase value may be combined with the detection based on the amplitude. In some examples, the detection based on the phase value has a higher accuracy than the detection based on the amplitude. Therefore, the amplitude-based detection can be carried out for rough alignment for example at or below the first predetermined distance 33, and the phase value detection can be carried out for fine alignment for example at or below the fourth predetermined distance 36.

In the present embodiment, a frequency of the communication signal is 13.56 MHz, which corresponds to a wavelength of 22.1 m. Herein, the primary pad 11 and the secondary pad 21 preferably comprise ferrite material. This ferrite acts as a magnetic conductor, steering a main part of the flux of the communication signal. Because of its high permeability and high permittivity, a velocity factor inside the ferrite material is very small, causing the wavelength to shrink to roughly 0.7 m. Thereby, accuracy of relative position detection is greatly enhanced in the present embodiments, and the offset between the primary unit 10 and the secondary unit 20 can be accurately mapped to phase shifts of -180° to +180° (same communication signal, phase shift between extremes of physical offsets).

The device configuration of the wireless communication units 12, 22 will now be explained with reference to the functional block diagram of Fig. 5.

The power transmission system 100 comprises as mentioned above both the wireless power system 1 and the second unit 10, which herein is the primary unit 10.

The primary unit 10 comprises the main communication antenna 13 configured to transmit the communication signal 32. For ease of understanding, the main communication antenna 23 of the secondary wireless communication unit 22, i.e. of the wireless power system 1, is omitted.

The secondary wireless communication unit 22 comprises the four auxiliary sensing antennas 24. Furthermore, the secondary wireless communication unit 22 comprises four amplifier units 25, one for each auxiliary sensing antenna 24, wherein the amplifier units 25 are configured to amplify the communication signal 32 received by the respective

11

auxiliary sensing antenna 24.

The secondary wireless communication 22 comprises two analog phase detectors 40, which each detect a relative phase between two of the (amplified) receptions of communication signal 32 by the respective auxiliary sensing antenna 24. This configuration pertains to a preferable two-dimensional relative position detection, and can be adapted to three-dimensional relative position detection accordingly, for instance via additional auxiliary sensing antennas 24 and phase detector(s) 40.

The secondary wireless communication unit 22 additionally comprises an MCU 27, which comprises two analog-to-digital converters 30 for conversion of the received communication signal.

The MCU 27 of the secondary unit 20 is especially connected to or included in the control unit 2 so as to perform the foregoing described relative position determination.

Preferably, in the present embodiment of Fig. 5, the phase detectors 40 are asynchronous and output DC signal. Therefore, a sampling-rate of the analog-to-digital converters 30 is preferably on the human scale, for example roughly 60 Hz, but can be chosen generally based on specifications of the electronics and costs thereof.

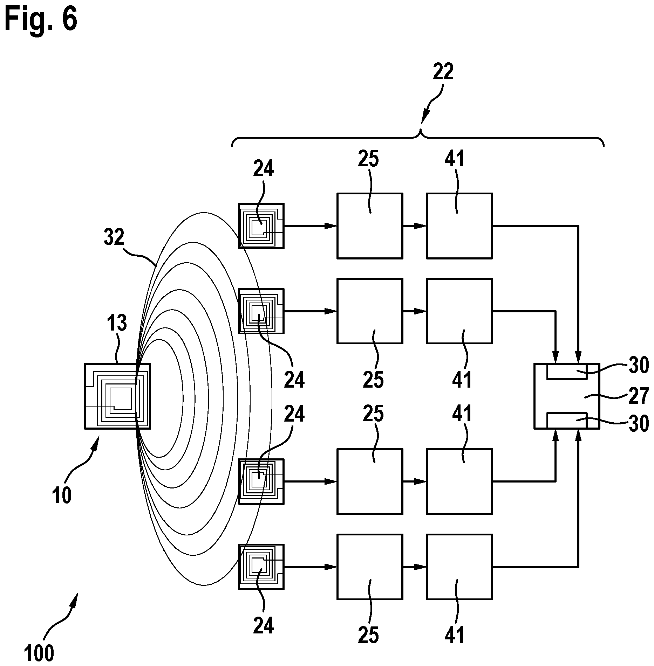

Fig. 6 shows a block diagram for explaining detail configurations of a power transmission system 100 according to a second embodiment of the present invention.

In the present embodiment, the secondary wireless communication unit 22 comprises four anti-aliasing filters 41, connected respectively to the amplifiers 25 and the analog-to-digital converters 30.

Via the anti-aliasing filters 41, direct high-speed sampling of a low-pass-filtered communication signal 32 along with fast Fourier-Transform in the MCU 27, accurate and fast phase value detection are provided.

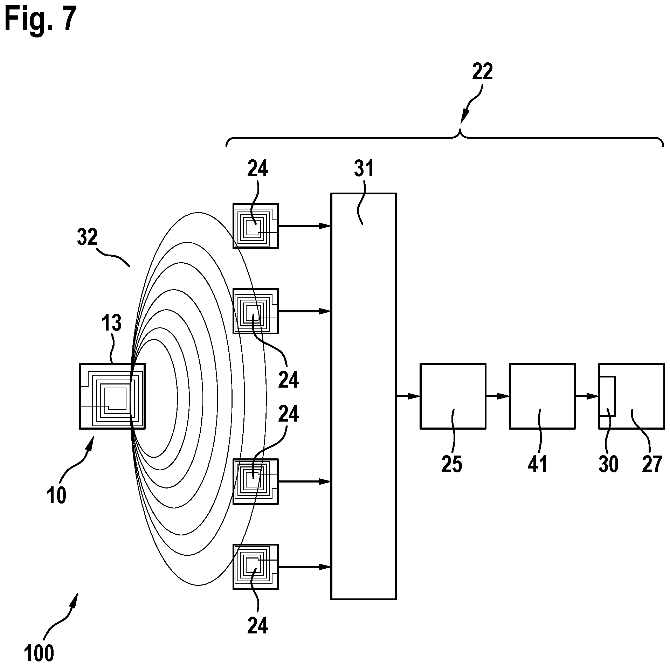

Fig. 7 shows another block diagram for explaining detail configurations of a power transmission system 100 according to a third embodiment of the present invention.

In the present embodiment, the secondary wireless communication unit 22 comprises a multiplexer 31 connecting each of the auxiliary sensing antennas 24 to the single amplifier 25. The amplifier 25 outputs to the single anti-aliasing filter 41, which is connected to the analog-to-digital converter 30 of the MCU 27. Thereby, an effective and low-cost configuration is achieved for accurate and fast relative position determination and alignment.

In the embodiments of Figs. 6 & 7, a sample-rate is preferably 2 x f, "f" being the frequency of the wireless communication signal. For instance, the sampling-rate is 2 x 13.56 MHz for the near-field-communication link. In some preferable embodiments, the sampling-rate may be twice a bandwidth of the anti-aliasing filter(s) 41, since the wireless communication signal aliases to lower frequencies, but does not cause ambiguities, since such lower frequencies are filtered away (also referred to as "undersampling").

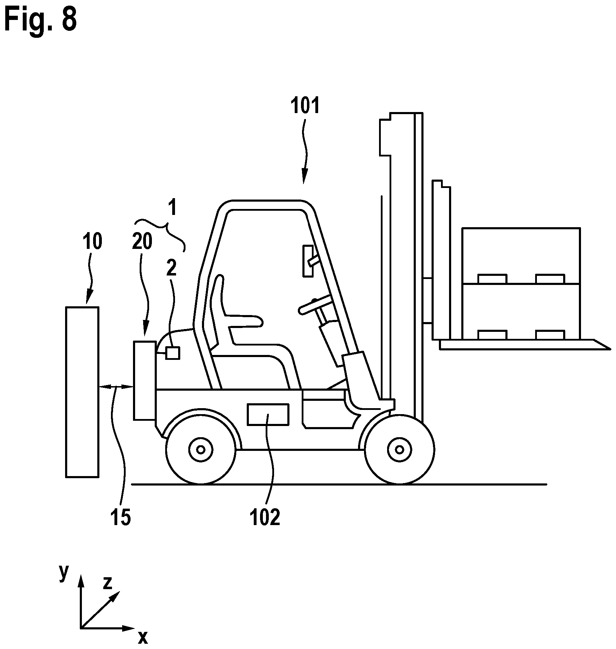

Fig. 8 shows a schematic drawing of an electric vehicle 101 of the present invention.

In the present embodiment, the electric vehicle 101 is comprised by the power transmission system 100 according to the first embodiment or the second embodiment or the third embodiment of the present invention.

In the present implementation example, the electric vehicle 101 comprises the wireless power system 1, in particular the first unit (secondary unit 20) and the control unit 2 of the wireless power system 1 according to the foregoing described embodiments.

For example, the electric vehicle 101 is an autonomous guided vehicle (AGV), in particular an autonomous forklift. Alternatively, the electric vehicle 101 may preferably be an autonomous robot or the like, especially in implementations of the wireless power system 1 in storage facilities, wherein the electric vehicle (autonomously or human-driven) retrieves and/or places stored items in the facility. Alternatively, the electric vehicle 101 may be an electric automobile or the like.

Herein, the second unit (i.e. the primary unit 10) of the power transmission system 100 is especially wall-mounted. The electric vehicle 101 comprises the control unit 2 and the secondary unit 20 of the wireless power system. Further, the electric vehicle 100 comprises a battery unit 102, wherein the battery unit 102 is charged via wireless power transmission from the primary unit 10.

Alternatively, the primary unit 10 may be floor mounted. Therein, the orientation or mounting position of the secondary unit 20 may correspondingly vary in accordance with the mounting position of the primary unit 10. For example, if the primary unit 10 is floor mounted, then the secondary unit 20 may be mounted at or under a floor of the electric vehicle 101.

With the foregoing described wireless power system 1 and the wireless power transmission system 100, the relative position of the primary unit 10 mounted on the wall and the secondary unit 20 mounted on the electric vehicle 101 can be detected. Further, using the detected result, especially via the control unit 2, the electric vehicle 101 can be efficiently and easily controlled so as to bring the secondary unit 20 into close alignment in three-dimensional space with the primary unit 10 for efficient wireless power transmission.

In particular, the control unit 2 is configured to, as described above, determine the relative position of the electric vehicle 101 from the at least one phase value of the communication signal 32 transmitted by the primary unit 10, and to determine the relative position of the vehicle 101 and the primary unit 10.

Advantageously, the control unit 2 of the vehicle 101 is further configured to control the vehicle 101, especially a drive unit of the vehicle 101 (i.e. motor, wheels etc.), to move the vehicle 101 according to the determined relative position so as to reduce, especially minimize, the distance to the primary unit 10, i.e. to reduce the air gap 15.

Further preferably, the control unit 2 of the vehicle 101 is configured to enable wireless power transfer, especially wireless charging of the battery unit 102, once the vehicle 101 is deemed to be aligned with the primary unit 10, especially once the air gap 15 based on the determined relative position is smaller than a predetermined threshold (for example, smaller than the aforementioned third predetermined distance 35).

In particular, the control unit 2 of the vehicle 101 is configured to determine the relative position of the vehicle 101 once, and move the vehicle 101 according to the above. This has the advantage of lower compute power being necessary for the control unit 2 of the vehicle 101. In an advantageous modification to the present embodiment, the control unit 2 of the vehicle 101 is configured to continuously, for example every few, i.e. 2 or 5 or 10 seconds, detect the relative position and move the vehicle 101 accordingly. This increases the accuracy of alignment, and especially provides redundant measurements which can be used to verify the determination.

In a further possible implementation, the electric vehicle 101 may also be an elevator. Therein, the primary unit 10 is preferably mounted at a bottom of an elevator shaft, wherein the secondary unit 20 is preferably mounted at or below a floor of the elevator. In other implementation examples, the primary unit 10 is preferably mounted at a wall of the elevator and the secondary unit 20 is preferably mounted at a wall of the elevator shaft, for example on the first (or ground) floor, at which the elevator generally spends the most time. Thereby, advantageously, wear of a cable connecting electronics of the elevator can be prevented by replacing such a cable with the wireless power system 1 of the present invention.

The foregoing described embodiments may be suitably combined. In addition, references to primary/transmission side and secondary/reception side may be suitably reversed.

In addition to the foregoing written explanations, it is explicitly referred to figures 1 to 8, wherein the figures in detail show logic circuit diagrams and configuration examples of the invention.

List of Reference Numerals

| | |
|---|---|
| 1 | wireless power system |
| 2 | control unit |
| 10 | primary unit |
| 11 | primary pad |
| 12 | primary wireless communication unit |
| 13 | main communication antenna |
| 15 | air gap |
| 20 | secondary unit |
| 21 | secondary pad |
| 22 | secondary wireless communication unit |
| 23 | main communication antenna |
| 24 | auxiliary sensing antenna |
| 25 | amplifier unit |
| 27 | microcontroller |
| 30 | analog-to-digital converter |
| 31 | multiplexer |
| 32 | communication signal |
| 33 | first distance |
| 34 | second distance |
| 35 | third distance |
| 36 | fourth distance |
| 37 | center point |
| 38 | abscissa |
| 39 | ordinate |
| 40 | phase detector |
| 41 | anti-aliasing filter |
| 100 | power transmission system |
| 101 | electric vehicle |
| 102 | battery unit |

**Claims**

1.  Wireless power system (1), comprising:

    • a first unit (10, 20) including a pad (11, 21) configured to wirelessly transmit or receive power and a wireless communication unit (12, 22); and
    • a control unit (2);
    • wherein the pad (11, 21) is configured to wirelessly transmit or receive power to or from a second unit (10, 20), and the wireless communication unit (12, 22) is configured to receive a communication signal (32) from the second unit (10, 20), and wherein
    • the control unit (2) is configured detect at least one phase value of the communication signal (32) and to determine, based on the detected phase value, a relative position of the wireless communication unit (12, 22) and the second unit (10, 20).

2.  Wireless power system (1) according to claim 1, wherein the control unit (2) is configured to calculate a phase-relation as the phase-value, especially a phase-difference, between multiple receptions of the communication signal (32) and to determine said relative position based on the calculated phase-relation.

3.  Wireless power system (1) according to claim 2, wherein the control unit (2) is configured to calculate a time-phase-relation, as the phase-relation, between multiple receptions at respectively different times, especially during relative movement of the wireless communication unit (12, 22) and the second unit (10, 22).

4.  Wireless power system (1) according to claim 3, wherein the control unit (2) is configured to calculate at least two time-phase-relations, respectively between two receptions at different times, and to calculate a time-dependent change between the time-phase-relations.

5.  Wireless power system (1) according to claim 4, wherein the control unit (2) is configured to compare the time-dependent change with input and/or predetermined movement information, especially comprising amount and/or direction, of the wireless communication unit (12, 22).

6.  Wireless power system (1) according to any one of the foregoing claims, wherein the wireless communication unit (12, 22) comprises at least one main communication antenna (13, 23) for transmitting and receiving the communication signal (32), and wherein the wireless communication unit (12, 22) comprises at least one, especially two to four, auxiliary sensing antennas (24) for detecting the relative position.

7.  Wireless power system (1) according to claim 6, wherein the control unit (2) is configured to calculate a space-phase-relation, as the phase value, between multiple receptions of the communication signal (32) at respectively different antennas, of the at least one main communication antenna (13, 23) and the at least one auxiliary sensing antenna (24), and to determine said relative position based on the calculated space-phase-relation.

8.  Wireless power system (1) according to claim 7, wherein the control unit (2) is configured to calculate a difference between phases of the multiple receptions, as the space-phase-relation, and to determine a distance between the respectively different antennas to the second unit (10, 20).

9.  Wireless power system (1) according to any one of claims 6 to 8, wherein a plurality of auxiliary sensing antennas (24) are arranged surrounding, especially symmetrically surrounding, the main communication antenna (23).

10. Wireless power system (1) according to any one of the foregoing claims, wherein the control unit (2) is further configured to detect a signal strength, especially a maximum amplitude and/or a maximum peak-to-peak value, of the communication signal (32) and to determine, based on the detected signal strength and on the detected phase value, the relative position of the wireless communication unit (12, 22) and the second unit (10, 20).

11. Wireless power system (1) according to any one of the foregoing claims, wherein the wireless communication unit (12, 22) is separated by a distance to the second unit (10, 20) and the control unit (2) is configured to:

    • at or below a first predetermined distance value, detect the relative position using the communication signal (32); and/or
    • at or below a second predetermined distance value, transfer data using the communication signal (32).

12. Wireless power system (1) according to claim 11, wherein the first predetermined distance value is larger than the second predetermined distance value, and wherein the control unit (2) is configured to transfer data using the communication signal only below the second predetermined distance value.

13. Wireless power system (1) according to claim 11 or claim 12, wherein the control unit (2) is configured to control the pad (11, 21) to wirelessly transfer and/or receive power at or below a third predetermined distance value, wherein the third predetermined distance value is smaller than the second predetermined distance value.

14. Power transmission system (100), comprising the wireless power system (1) according to any one of the foregoing claims and the second unit (10, 20), wherein the first unit (10, 20) is a secondary unit (20), the pad (11, 21) is a secondary pad (21) configured to wirelessly receive power, and the wireless communication unit (12, 22) is a secondary wireless communication unit (22), wherein the second unit (10, 20) is a primary unit (10) including a primary pad (11) for wireless power transmission and a primary wireless communication unit (12).

15. Power transmission system (100) according to claim 14, wherein the primary wireless communication unit (12) comprises at least one primary main communication antenna (23) for transmitting and receiving the communication signal (32), and wherein the primary wireless communication unit (12) comprises at least one, especially two to four, primary auxiliary sensing antennas (24) for detecting the relative position.

# Fig. 1

# Fig. 2

**Fig. 3**

**Fig. 4**

# Fig. 5

# Fig. 6

# Fig. 7

**Fig. 8**

Europäisches
Patentamt
European
Patent Office
Office européen
des brevets

# EUROPEAN SEARCH REPORT

**Application Number**

EP 24 20 9559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/359003 A1 (LEE KYUNG-WOO [KR] ET AL) 13 December 2018 (2018-12-13) | 1,2,14 | INV. H02J50/90 |
| A | * paragraphs [0002], [0010], [0011], [0024], [0028], [0073] - [0075], [0089], [0093], [0096], [0106]; figure 3 * | 3-13,15 | |
| | ----- | | |
| X | WO 2020/013989 A1 (MOMENTUM DYNAMICS CORP [US]) 16 January 2020 (2020-01-16) | 1,2 | |
| A | * paragraphs [0002] - [0005], [0021], [0024] - [0026]; figures 1,2,2a,4 * | 3-15 | |
| | ----- | | |

**TECHNICAL FIELDS SEARCHED (IPC)**

H02J

The present search report has been drawn up for all claims

| Place of search | Date of completion of the search | Examiner |
|---|---|---|
| Munich | 28 April 2025 | Hanisch, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 9559

This annex lists the patent family members relating to the patent documents cited in the above-mentioned European search report.
The members are as contained in the European Patent Office EDP file on
The European Patent Office is in no way liable for these particulars which are merely given for the purpose of information.

28-04-2025

| Patent document cited in search report | Publication date | Patent family member(s) | Publication date |
|---|---|---|---|
| US 2018359003 A1 | 13-12-2018 | EP 3444925 A1 | 20-02-2019 |
| | | US 2017288738 A1 | 05-10-2017 |
| | | US 2018359003 A1 | 13-12-2018 |
| | | US 2020052739 A1 | 13-02-2020 |
| | | WO 2017171440 A1 | 05-10-2017 |
| WO 2020013989 A1 | 16-01-2020 | CA 3105049 A1 | 16-01-2020 |
| | | CN 112425031 A | 26-02-2021 |
| | | EP 3821519 A1 | 19-05-2021 |
| | | ES 2955420 T3 | 30-11-2023 |
| | | JP 7281832 B2 | 26-05-2023 |
| | | JP 2021530950 A | 11-11-2021 |
| | | KR 20210029797 A | 16-03-2021 |
| | | PT 3821519 T | 05-09-2023 |
| | | WO 2020013989 A1 | 16-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130033224 A1
- US 10072947 B
- US 20200290467 A1
- US 20170111088 A1